# DEMANDE DE BREVET EUROPEEN

(11) **EP 1 511 217 A1**
(43) Date de publication de la demande: **02.03.2005**
(21) Numéro de dépôt: 04292030.6
(22) Date de dépôt: 11.08.2004
(51) Int. Cl.: H04L 12/24

(54) **Utilisation d'un système de gestion d'équipements de réseau à base de règles de politique, pour le controle centralisé de l'instauration de règles de politique**

(30) Priorité: 29.08.2003 FR 0310283
(71) Demandeur: ALCATEL, 75008 Paris (FR)
(72) Inventeur: Edwiges, Maurice, 91280 St Pierre du Perray (FR); Gonguet, Arnaud, 75013 Paris (FR)
(74) Mandataire: Chaffraix, Sylvain

(57) **Abrégé**

Un système de gestion d'équipements de réseau (EMS), pour un système de gestion (NMS) d'un réseau de communications comportant une multiplicité d'équipements de réseau (NE) gérés par des règles de politique associées à des services, comprend des moyens de traitement (MT) chargés, lorsqu'il reçoivent une demande de contrôle d'instauration d'un jeu de règles de politique associées à un service, de déterminer des données d'information représentatives de ce jeu, puis de rechercher ces données d'information dans au moins un équipement géré (NE) dudit réseau, concerné par ledit jeu.

## Description

L'invention concerne les réseaux de communications dans lesquels les équipements (ou éléments) de réseau sont gérés en fonction d'une politique (ou « policy ») définie par des règles de politique (ou « policy rules »).

On entend ici par « règle de politique » une règle de type « si <condition> alors <action> ». Ces règles de politique définissent des traitements de trafic, associés à des services, que doivent effectuer les équipements de réseau. Elles sont élaborées par l'opérateur (ou le superviseur) du réseau en fonction des équipements qui le constituent et des accords de niveau de service (ou SLAs pour « Service Level Agreements ») passés avec ses clients.
Par ailleurs, on entend ici par « équipement de réseau » tout type de matériel, comme par exemple des serveurs, des terminaux, des commutateurs, des routeurs ou des concentrateurs, capable d'échanger des données, notamment de gestion, selon un protocole de gestion de réseau avec le système de gestion de réseau (ou NMS pour « Network Management System ») de son réseau d'appartenance. Le protocole de gestion de réseau peut être par exemple le protocole SNMP (pour « Simple Network Management Protocol » RFC 2571-2580) utilisé notamment dans les réseaux de type ADSL, le protocole TL1 utilisé notamment dans les réseaux de type SONET, le protocole Q3 utilisé notamment dans les réseaux de type SDH, ou encore les protocoles CLI et CORBA.
En outre, on entend ici par « élément de réseau » tout composant d'un équipement de réseau capable d'assurer au moins un traitement de trafic, comme par exemple une carte, une interface, un étage (ou « shelf »), ou un tiroir (ou « rack »). Un tel élément de réseau peut être défini par une ou plusieurs capacités qui définissent son aptitude à assurer une fonction au sein du réseau, comme par exemple conditionner des paquets de données, ou convertir des adresses de réseau, ou encore assurer un traitement spécifique.
Enfin, on entend ici par « trafic » aussi bien un flux de paquets de données qu'un simple paquet de données.

Dans les réseaux précités, les règles de politique associées à un service sont transmises sous forme de commandes de configuration aux équipements (ou éléments) de réseau concernés, afin qu'ils se configurent en conséquence pour permettre l'instauration du service. Or, il n'existe pas de mécanisme connu permettant de contrôler ou vérifier automatiquement et directement si des équipements de réseau sont configurés correctement, consécutivement à la transmission de règles de politique, ou bien s'ils disposent déjà d'une configuration particulière.
Seules deux techniques indirectes peuvent permettre un tel contrôle ou une telle vérification. L'une de ces techniques consiste à utiliser ce que l'homme de l'art appelle un « craft terminal » (c'est-à-dire un terminal dédié à la gestion locale d'équipement(s)) pour entrer toutes les commandes de configuration qui correspondent à des règles de politique, puis pour visualiser si les équipements sont correctement configurés. L'autre technique consiste à utiliser une interface graphique de type GUI (pour « Graphical User Interface »), implantée au niveau de la couche de gestion d'équipements EML (pour « Element Management Layer ») du système de gestion NMS du réseau, pour visualiser si les équipements sont correctement configurés.
Ces techniques ne sont pas entièrement satisfaisantes puisqu'elles imposent l'établissement de nombreuses sessions (ou connexions) avec les équipements de réseau, lesquelles consomment des ressources du réseau. En outre, l'une au moins de ces techniques induit une augmentation des temps et coûts de maintenance des réseaux.
Une troisième technique, qui se rattache à la seconde, consiste à automatiser la vérification de la configuration des équipements, en récupérant leur configuration, et en comparant ces configurations aux règles de politique qui leur ont été envoyées. Une telle façon de faire a par exemple été décrite dans les demandes de brevets américains US 2002/0178380 et US 2002/0069274. Toutefois, il s'agit d'une solution difficile à mettre en oeuvre puisqu'elle oblige à pouvoir comparer une configuration d'équipement à des règles de politique. Cette tâche peut s'avérer lourde pour le serveur en charge de l'exécuter. Ensuite, comme la précédente approche, elle nécessite de nombreuses connexions aux équipements et augmente sensiblement le trafic réseau en récupérant les configurations des différents équipements.

L'invention a donc pour but d'améliorer la situation.
Elle propose à cet effet un système de gestion d'équipements de réseau (EMS), pour un système de gestion (NMS) d'un réseau de communications.
Ce système de gestion d'équipements (ou éléments) de réseau se caractérise par le fait qu'il comprend des moyens de traitement chargés, lorsqu'ils reçoivent une demande de contrôle d'instauration d'un jeu d'au moins une règle de politique associée à un service, de déterminer des données d'information représentatives de ce jeu, puis de rechercher ces données d'information dans l'un au moins des équipements gérés du réseau, concerné par le jeu.
Le système de gestion d'équipements (ou éléments) de réseau (EMS), selon l'invention, peut comporter d'autres caractéristiques qui pourront être prises séparément ou en combinaison, et notamment :
- une première mémoire stockant une table de correspondance entre des identifiants de service, associés à des jeux de règles de politique, et des données d'information. Dans ce cas, les moyens de traitement sont chargés, lorsqu'ils reçoivent une demande de contrôle d'instauration comportant un identifiant de service, de déterminer dans la table les données d'information qui correspondent à l'identifiant de service contenu dans la demande reçue, afin d'effectuer la recherche,
- une table pouvant également stocker des identifiants d'équipements de réseau en correspondance des identifiants de jeu. Dans ce cas, les moyens de traitement sont chargés, lorsqu'ils reçoivent une demande de contrôle d'instauration, d'effectuer la recherche de données d'information dans l'un au moins des équipements dont l'identifiant est stocké dans la table de la première mémoire en correspondance de l'identifiant du service contenu dans la demande reçue,
- des moyens de traitement chargés, lorsqu'ils reçoivent une demande de contrôle d'instauration comportant au moins un identifiant d'équipement de réseau, d'effectuer la recherche de données d'information dans chaque équipement dont l'identifiant est contenu dans la demande reçue,
- des moyens de traitement comprenant une seconde mémoire dans laquelle sont stockés des descripteurs de politique associés chacun à un identifiant de service. Chaque descripteur de politique est agencé, d'une part, pour être chargé, consécutivement à la réception d'une demande de contrôle d'instauration comportant au moins l'identifiant de service qui lui est associé, de manière à accéder à la première mémoire pour en extraire les données d'information qui sont stockées en correspondance de l'identifiant de service, et d'autre part, pour générer des instructions dédiées à la recherche des données d'information dans au moins un équipement géré du réseau,
- des moyens de traitement comprenant des moyens d'adaptation de protocoles couplés aux descripteurs de politique et chargés de convertir les instructions de recherche en commandes de recherche, par exemple de type CLI ou de type SNMP, afin qu'elles soient transmises à chaque équipement concerné selon son protocole de gestion.
- des descripteurs de politique chargés, lorsqu'ils reçoivent un message de réponse transmis par un équipement, consécutivement à la réception d'une commande de recherche, de comparer les données d'information recherchées aux données d'information qui sont contenues dans le message de réponse et de générer un message de compte rendu représentatif du résultat de cette comparaison.
L'invention propose également un serveur de gestion équipé d'un système de gestion d'équipement (EMS) du type de celui présenté ci-avant.
L'invention propose également un procédé de contrôle d'instauration de règles de politique, associées à des services, dans des équipements gérés d'un réseau de communications.
Ce procédé se caractérise par le fait qu'il consiste, en cas de demande de contrôle d'instauration d'un jeu d'au moins une règle de politique associée à un service, à déterminer des données d'information représentatives du jeu, puis à rechercher les données d'information dans au moins un équipement géré du réseau, concerné par ce jeu.
L'invention est particulièrement bien adaptée, bien que de façon non exclusive, aux réseaux de communications tels que les réseaux de transmission (par exemple de type WDM, SONET, SDH), les réseaux de données (par exemple de type Internet-IP ou ATM), les réseaux de voix (par exemple de type classique ou mobile) ou les réseaux mixtes voix-données (par exemple de type NGN). Par ailleurs, l'invention peut permettre de contrôler de nombreux types d'équipement de réseau, et notamment des stations de base (ou gateways) de transmission satellitaire.

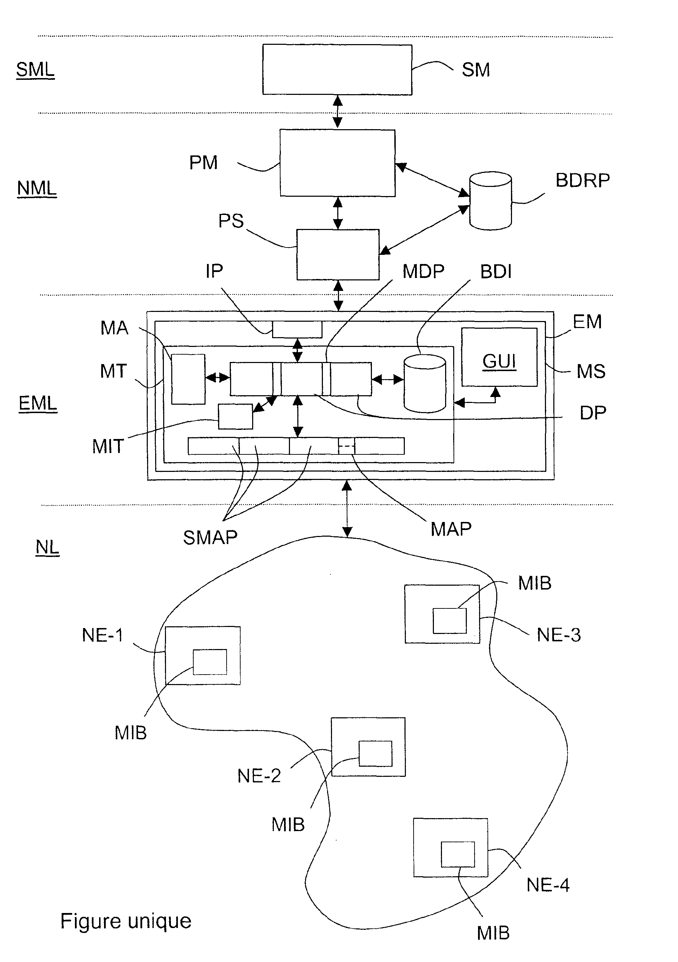

D'autres caractéristiques et avantages de l'invention apparaîtront à l'examen de la description détaillée ci-après, et du dessin annexé, sur lequel l'unique figure illustre de façon schématique un exemple de réseau de communications équipé d'un système de gestion d'équipements (EMS) selon l'invention, implanté dans un serveur de gestion (MS).
Les dessins annexés pourront non seulement servir à compléter l'invention, mais aussi contribuer à sa définition, le cas échéant.
L'invention a pour objet de permettre le contrôle de l'instauration de règles de politique dans des équipements (ou éléments) d'un réseau de communications.

On considère dans ce qui suit, à titre d'exemple illustratif, que le réseau de communications est au moins en partie de type Internet (IP). Mais, l'invention s'applique à d'autres types de réseau, comme par exemple aux réseaux de transmission de type WDM, SONET ou SDH, aux réseaux de données de type ATM, ou aux réseaux de voix de type classique ou mobile, ou encore aux réseaux mixtes voix-données tels que les réseaux de type NGN.

Comme cela est illustré sur l'unique figure, un réseau de communications de type géré peut être schématiquement décomposé en quatre couches : une première couche appelée couche de gestion de services SML (pour « Service Management Layer »), une deuxième couche couplée à la couche SML et appelée couche de gestion de réseau NML (pour « Network Management Layer »), une troisième couche couplée à la couche NML et appelée couche de gestion d'éléments EML (pour « Element Management Layer »), et une quatrième couche couplée à la couche EML et appelée couche réseau NL (pour « Network Layer »).
Les première SML, deuxième NML et troisième EML couches définissent au moins en partie le système de gestion du réseau (ou NMS pour « Network Management System ») qui est destiné à permettre au gestionnaire (ou superviseur) du réseau de gérer et contrôler à distance les équipements de réseau gérés NE-i auxquels il est couplé.
La quatrième couche NL comprend une multiplicité d'équipements de réseau NE-i (ici i = 1 à 4, mais il peut prendre n'importe quelle valeur) constitués d'au moins un élément de réseau et reliés les uns aux autres par des moyens de communications.

Chaque équipement de réseau NE-i est capable d'échanger des données de gestion avec le système de gestion NMS, selon un protocole de gestion choisi, comme par exemple le protocole SNMP (pour « Simple Network Management Protocol » RFC 2571-2580), ou les protocoles TL1, CORBA, CLI ou Q3. Un équipement de réseau NE-i est par exemple un serveur périphérique ou de coeur, un terminal, un commutateur, un routeur, un concentrateur, ou une station de base (ou gateway) de transmission satellitaire. Par ailleurs, un élément de réseau est un composant d'un équipement de réseau NE-i capable d'assurer au moins un traitement de trafic. Il s'agit par exemple d'une carte, d'une interface, d'un étage (ou « shelf »), ou d'un tiroir (ou « rack »). Une fois configuré, un élément de réseau est chargé d'assurer une fonction au sein du réseau, comme par exemple conditionner des paquets de données, ou convertir des adresses de réseau, ou encore assurer un traitement de type BGP/MPLS VPN SAP (Service Access Point).
La première couche SML est constituée d'un gestionnaire de service SM chargé de traduire en règles de politique (ou « policy rules ») des accords de niveau de service (ou SLAs pour « Service Level Agreements ») passés entre l'opérateur du réseau et ses clients.
Ces règles de politique définissent par groupe des politiques élaborées par l'opérateur de manière à satisfaire les accords de niveau de service (SLA). Elles sont destinées à définir les traitements de trafic (ou fonctions) que les différents équipements de réseau gérés NE-i, et leurs éléments de réseau, doivent effectuer (ou assurer), une fois configurés, afin de mettre en oeuvre les services offerts par le réseau, comme par exemple un service de type réseau virtuel privé (ou IP VPN).
La deuxième couche NML est constituée d'un gestionnaire de politique PM (pour « Policy Manager »), alimenté en règles de politique par le gestionnaire de service SM, et d'un ou plusieurs serveurs de politique PS (ou « Policy Server ») couplé(s) au gestionnaire de politique PM.
Le gestionnaire de politique PM permet principalement à l'administrateur du réseau, ou à son opérateur, d'associer des rôles à des règles de politique. Chaque serveur de politique PS est chargé de valider les règles de politique qu'il reçoit du gestionnaire de politique PM, de les stocker dans une mémoire de règles de politique BDR et de les transmettre sélectivement à la troisième couche EML.
Chaque service étant défini par un jeu d'au moins une règle de politique devant être instaurée par un ou plusieurs équipements NE-i du réseau, la mémoire de règles de politique BDR comporte préférentiellement une table de correspondance entre des identifiants de service et des jeux de règles de politique.
Par exemple, l'identifiant de service n°204 est associé à la règle de service appelée « Create VRF » et définie par « If true then set the VRF to VRF1 ». Cette règle de politique indique qu'il faut créer une VRF portant le nom « VRF1 ».

La troisième couche EML est constituée d'un ou plusieurs modules de gestion d'équipements (ou d'éléments) EM (ou « Elément Management ») chargés d'assurer l'interface de dialogue entre le système de gestion NMS, et notamment ses première SML et seconde NML couches, et les équipements NE-i (ou éléments) du réseau auxquels ils sont respectivement couplés. Par exemple, chaque module de gestion d'équipements EM est implanté dans un serveur de gestion.
Dans l'exemple illustré sur l'unique figure, on n'a représenté qu'un unique serveur de politique PS et un unique système de gestion d'éléments EMS. Mais, le système de gestion de réseau NMS peut comporter plusieurs serveurs de politique PS couplés au gestionnaire de politique PM, et chaque serveur de politique PS peut être couplé à plusieurs systèmes de gestion d'éléments EMS.
Comme indiqué ci-dessus, le système de gestion d'équipements EMS selon l'invention est chargé classiquement de faire dialoguer entre elles les interfaces du réseau (et notamment celles des équipements), et de gérer les alarmes et les événements déclenchés ou survenus au sein des équipements de réseau NE-i.
Il comporte à cet effet un module de traitement MT couplé, d'une part, à un serveur de politique PS de la seconde couche NML, préférentiellement via une interface de politique IP (ou « Policy Interface »), et d'autre part, à certains équipements NE-i du réseau.
Le module de traitement MT comporte tout d'abord un arbre d'informations de gestion (ou MIT pour « Management Information Tree ») et une mémoire de descripteurs MDP dans laquelle sont stockés des descripteurs de politique DP.
Un descripteur de politique DP est un module informatique qui contient toutes les données nécessaires à la gestion par le système de gestion d'équipements EMS d'un aspect d'au moins un élément d'équipement NE-i, correspondant à un jeu de règles de politique. Un descripteur de politique DP repose sur un modèle interne d'objet décrivant un aspect d'un équipement NE-i.
Un descripteur de politique DP est donc un module informatique capable non seulement de fournir aux équipements de réseau NE-i dont il a la charge des instructions permettant de les configurer conformément à des jeux de règles de politique, de sorte qu'ils instaurent tout ou partie de services associés à ces jeux, mais également de déterminer dans lesdits équipements de réseau NE-i des données d'information représentatives de leurs configurations respectives correspondant auxdits jeux.
Un descripteur de politique DP peut également comporter tout ou partie des informations associées à un ou plusieurs équipements et définissant leurs états respectifs, et notamment les protocoles d'échange (ou de gestion) qu'ils utilisent.
Chaque descripteur de politique DP est généralement constitué d'au moins un premier fichier de codes de programmes permettant de discuter avec une interface d'équipement, un deuxième fichier contenant des données qui désignent au moins un type d'équipement NE-i, et un troisième fichier contenant des données qui désignent une définition de base d'informations de gestion, ou définition de MIB (« Management Information Base »), associée à l'équipement NE-i du type considéré, et d'au moins un fichier de configuration, par exemple de type XML, qui contient des informations permettant de gérer un type d'équipement du réseau. Les fichiers de codes de programmes des descripteurs de politique DP sont préférentiellement en langage Java, en raison de l'aptitude de ce langage à charger et décharger de façon dynamique des codes informatiques. Mais, d'autres langages peuvent être envisagés, comme par exemple Small Talk, dès lors qu'ils permettent le chargement et le déchargement dynamique de codes informatiques.

Grâce à ces descripteurs de politique DP, le module de traitement MT est capable de contrôler ou vérifier l'instauration d'un jeu de règles de politique dans un ou plusieurs équipements de réseau NE-i. Ce contrôle s'effectue à la demande de l'opérateur (ou de l'administrateur) du réseau par le biais d'une demande de contrôle d'instauration d'un jeu d'au moins une règle de politique associée à un service. Cette demande peut être transmise au module de traitement MT soit par le gestionnaire de politique PM, via le serveur de politique PS, soit par un module d'interface graphique, par exemple de type GUI (pour « graphical User Interface »), implanté dans le système de gestion d'équipements EMS ou délocalisé dans le système de gestion de réseau NMS.
Plus précisément, lorsque le module de traitement MT reçoit une demande de contrôle d'instauration d'un jeu d'au moins une règle de politique associée à un service, il détermine des données d'information représentatives de ce jeu, puis il recherche ces données d'information dans l'un au moins des équipements gérés NE-i du réseau, concerné par le jeu.

Cette détermination de données d'information s'effectue préférentiellement par interrogation d'une mémoire BDI du module de traitement MT, couplée à la mémoire de descripteurs BDP et dans laquelle est stockée une table de correspondance entre des identifiants de service, associés à des jeux de règles de politique, et des données d'information.
Les données d'information sont par exemple des portions (textuelles) des règles de politiques stockées dans la mémoire de règles BDRP, et représentatives de leur instauration par un équipement NE-i. Dans l'exemple précité du service VRF, les données d'information caractéristiques sont par exemple « IP VRF VRF1 ». Ces données d'information sont donc stockées dans la table de la mémoire BDI en correspondance de l'identifiant de service n°204.

Les données d'information et les identifiants de service peuvent être également, éventuellement, stockés en correspondance des identifiants (réseau) des équipements NE-i concernés. En variante, les descripteurs de politique DP peuvent comporter les identifiants (réseau) des équipements NE-i concernés. Ainsi, lorsque le module de traitement MT reçoit une demande de contrôle d'instauration, il la transmet à un module d'analyse MA qu'il comprend, chargé de déterminer le descripteur de politique DP associé à l'identifiant de service qu'elle contient. Le module d'analyse MA charge (ou active) alors le descripteur de politique DP qu'il vient de déterminer, afin qu'il puisse accéder à la mémoire BDI pour y déterminer les données d'information, ainsi qu'éventuellement le ou les identifiants d'équipement, stockés dans la table en correspondance de l'identifiant de service. Une fois en possession des données d'information et du ou des identifiants d'équipement, le descripteur de politique chargé DP peut initier la recherche desdites données d'information dans le ou les équipements identifiés.
En l'absence d'identifiant d'équipement dans la mémoire BDI, chaque identifiant d'équipement, objet d'une recherche de données d'information, doit être contenu dans la demande de contrôle d'instauration transmise au module de traitement MT. Par conséquent, le descripteur de politique chargé DP n'extrait de la mémoire BDI que les données d'information stockées en correspondance de l'identifiant de service contenu dans la demande reçue, puis effectue sa recherche dans chaque équipement NE-i désigné dans la demande reçue.
Pour initier la recherche des données d'information, le descripteur de politique chargé DP génère des instructions de recherche contenant les données d'information recherchées, qu'il vient d'extraire de la mémoire BDI.
Les équipements de réseau gérés NE-i pouvant utiliser des protocoles de gestion différents, par exemple de type CLI (pour « Command Line Interface ») ou SNMP, les instructions de recherche doivent donc être converties en commandes de recherche adaptées à leurs protocoles de gestion respectifs.
Cette conversion est préférentiellement assurée par un module d'adaptation de protocole MAP que comprend le module de traitement MT (mais qui peut également ne pas en faire partie, tout en faisant partie du système de gestion d'équipements EMS). Comme le sait l'homme de l'art, certains systèmes de gestion d'équipements EMS sont en effet pourvus d'un module d'adaptation de protocole MAP comportant des sous-modules SMAP, en nombre au moins égal au nombre de protocoles de gestion utilisés par les différents équipements de réseau NE-i qu'ils gèrent.
Chaque sous-module d'adaptation de protocole SMAP est chargé de transformer, sur ordre, des instructions, notamment de recherche, destinées à un équipement NE-i, en commandes au format du protocole de gestion utilisé par cet équipement.
Comme indiqué précédemment, le descripteur de politique chargé DP connaît généralement les protocoles utilisés par les équipements de réseau NE-i auprès desquels la recherche de données d'information doit être effectuée. Par conséquent, une fois qu'il a déterminé les instructions destinées à un équipement de réseau NE-i sélectionné, il détermine le protocole de gestion de cet équipement NE-i, puis en déduit le sous-module d'adaptation de protocole SMAP qui lui correspond. Il transmet alors à ce sous-module d'adaptation de protocole SMAP les instructions à transformer (ou convertir) en commandes selon le protocole de gestion (ou d'échange) utilisé par l'équipement NE-i.
Par exemple, une commande de recherche au format CLI se présente sous la forme « Show IP VRF VRF1 ». Dans cet exemple particulier, la commande CLI est destinée à demander à un équipement NE-i si la valeur de son paramètre de configuration VRF est égale à VRF1.

Une fois les commandes de recherche générées, le sous-module d'adaptation de protocole SMAP les transmet à l'équipement NE-i concerné, de façon classique.
Lorsqu'un équipement de réseau NE-i reçoit une commande de recherche, il la traite, puis renvoie au système de gestion NMS, et plus précisément au système de gestion d'équipements EMS dont il dépend, un message de réponse contenant soit les données d'information recherchées s'il les possède, soit des données d'avertissement signalant qu'il ne possède pas les données d'information recherchées.

Ce message de réponse est alors transmis au descripteur de politique DP ayant initié la recherche afin qu'il compare les données d'information recherchées aux données d'information qu'il contient. Une fois la comparaison terminée, le descripteur de politique DP génère un message de compte rendu à destination du module du système de gestion NMS qui avait généré la demande de contrôle d'instauration. Le compte-rendu peut alors être affiché sur un écran par l'intermédiaire d'un module d'interface graphique GUI.
Le système de gestion d'équipements EMS selon l'invention, et notamment son module de traitement MT, peut être réalisé sous la forme de circuits électroniques, de modules logiciels (ou informatiques), ou d'une combinaison de circuits et de logiciels.

Grâce à l'invention, il est désormais possible de contrôler ou vérifier, à distance, de façon automatisée et sans recourir à des connections individuelles et/ou à des équipements tiers tels que des « craft terminals », si un équipement de réseau est configuré conformément à des règles de politique choisies. Il est important de noter que ce contrôle peut permettre de vérifier que des règles de politique ont bien été prises en compte par un ou plusieurs équipements de réseau, ou en d'autres termes que des équipements sont correctement configurés compte tenu des règles de politique qui leur ont été transmises, mais également de déterminer si des équipements de réseau n'ont pas déjà été configurés compte tenu de règles de politique.

L'invention offre également un procédé de contrôle d'instauration de règles de politique, associées à des services, dans des équipements gérés NE-i d'un réseau de communications.
Celui-ci peut être notamment mis en oeuvre à l'aide du système de gestion d'équipements EMS présenté ci-avant. Les fonctions et sous-fonctions principales et optionnelles assurées par les étapes de ce procédé étant sensiblement identiques à celles assurées par les différents moyens constituant le système de gestion d'équipements EMS, seules seront résumées ci-après les étapes mettant en oeuvre les fonctions principales du procédé selon l'invention.
Ce procédé consiste, en cas de demande de contrôle d'instauration d'un jeu d'au moins une règle de politique associée à un service, à déterminer des données d'information représentatives du jeu, puis à rechercher les données d'information dans au moins un équipement géré NE-i du réseau, concerné par ce jeu.

L'invention ne se limite pas aux modes de réalisation de système de gestion d'équipements EMS, de serveur de gestion MS et de procédé de contrôle décrits ci-avant, seulement à titre d'exemple, mais elle englobe toutes les variantes que pourra envisager l'homme de l'art dans le cadre des revendications ci-après.

## Revendications

1. Système de gestion d'équipements de réseau (EMS), pour un système de gestion (NMS) d'un réseau de communications comprenant une multiplicité d'équipements de réseau (NE) gérés par des règles de politique associées à des services, **caractérisé en ce qu'**il comprend des moyens de traitement (MT) agencés, en cas de réception d'une demande de contrôle d'instauration d'un jeu d'au moins une règle de politique associée à un service, pour déterminer des données d'information représentatives dudit jeu, puis pour rechercher lesdites données d'information dans au moins un équipement géré (NE) dudit réseau, concerné par ledit jeu.

2. Système selon la revendication 1, **caractérisé en ce qu'**il comprend une première mémoire (BDI) stockant une table de correspondance entre des identifiants de service, associés à des jeux de règles de politique, et des données d'information, et **en ce que** lesdits moyens de traitement (MT) sont agencés, en cas de réception d'une demande de contrôle d'instauration comportant un identifiant de service, pour déterminer dans ladite table les données d'information correspondant à l'identifiant de service contenu dans la demande reçue, de manière à effectuer ladite recherche.

3. Système selon la revendication 2, **caractérisé en ce que** ladite première mémoire (BDI) stocke dans ladite table des identifiants d'équipements de réseau (NE) en correspondance desdits identifiants de jeu.

4. Système selon la revendication 3, **caractérisé en ce que** lesdits moyens de traitement (MT) sont agencés, en cas de réception d'une demande de contrôle d'instauration, pour effectuer ladite recherche de données d'information dans l'un au moins des équipements de réseau (NE) dont l'identifiant est stocké dans la table de ladite première mémoire (BDI) en correspondance de l'identifiant du service contenu dans ladite demande reçue.

5. Système selon l'une des revendications 1 et 2, **caractérisé en ce que** lesdits moyens de traitement (MT) sont agencés, en cas de réception d'une demande de contrôle d'instauration comportant au moins un identifiant d'équipement de réseau (NE), pour effectuer la recherche de données d'information dans chaque équipement de réseau (NE) dont l'identifiant est contenu dans ladite demande reçue.

6. Système selon l'une des revendications 2 à 5, **caractérisé en ce que** lesdits moyens de traitement (MT) comprennent une seconde mémoire (MDP) dans laquelle sont stockés des descripteurs de politique (DP) associés chacun à un identifiant de service et propres chacun i) à être chargés consécutivement à la réception d'une demande de contrôle d'instauration comportant au moins leur identifiant de service respectif de manière à accéder à ladite première mémoire (BDI) pour en extraire les données d'information stockées en correspondance dudit identifiant de service, et ii) à générer des instructions dédiées à la recherche desdites données d'information dans au moins un équipement (NE) dudit réseau.

7. Système selon la revendication 6, **caractérisé en ce que** lesdits descripteurs de politique (DP) comprennent des identifiants d'équipement de réseau (NE-i).

8. Système selon l'une des revendications 6 et 7, **caractérisé en ce que** lesdits moyens de traitement (MT) comprennent des moyens d'adaptation de protocoles (MAP) couplés auxdits descripteurs de politique (DP) et agencés pour convertir des instructions en commandes de recherche afin qu'elles soient transmises à chaque équipement de réseau (NE) concerné, selon le protocole de gestion qu'il utilise.

9. Système selon la revendication 8, **caractérisé en ce que** lesdites commandes de recherche sont choisies dans un groupe comprenant au moins les commandes de type CLI et de type SNMP.

10. Système selon l'une des revendications 6 à 9, **caractérisé en ce que** lesdits descripteurs de politique (DP) sont agencés, à réception d'un message de réponse transmis par un équipement de réseau (NE) consécutivement à la réception d'une commande de recherche, pour comparer lesdites données d'information recherchées auxdites données d'information contenues dans ledit message de réponse et pour générer un message de compte rendu représentatif du résultat de ladite comparaison.

11. Serveur de gestion (MS) d'un système de gestion de réseau (NMS), **caractérisé en ce qu'**il comprend un système de gestion d'équipements (EMS) selon l'une des revendications précédentes.

12. Procédé de contrôle d'instauration de règles de politique, associées à des services, dans des équipements gérés (NE) d'un réseau de communications, **caractérisé en ce qu'**il consiste, en cas de demande de contrôle d'instauration d'un jeu d'au moins une règle de politique associée à un service, à déterminer des données d'information représentatives dudit jeu, puis à rechercher lesdites données d'information dans au moins un équipement géré (NE) dudit réseau, concerné par ledit jeu.
